# EUROPEAN PATENT APPLICATION

(11) **EP 4 559 972 A1**
(43) Date of publication of application: **28.05.2025**
(21) Application number: 23843337.9
(22) Date of filing: 18.07.2023
(51) Int. Cl.: C08L 33/12, C08L 51/00, C08L 51/04, C08L 51/08, C08L 67/00, C08L 83/10, C08L 79/04, C08K 5/08, C08K 5/3492

(54) **THERMOPLASTIC RESIN COMPOSITION AND MOLDED PRODUCT MANUFACTURED FROM SAME**

(30) Priority: 21.07.2022 KR 20220090517
(71) Applicant: LOTTE CHEMICAL CORPORATION, Seoul 05551 (KR)
(72) Inventor: KIM, In-Chol, Uiwang-si, Gyeonggi-do 16073 (KR); SHIN, Hyeongseob, Uiwang-si, Gyeonggi-do 16073 (KR); KIM, Jungwook, Uiwang-si, Gyeonggi-do 16073 (KR); PARK, Jieun, Uiwang-si, Gyeonggi-do 16073 (KR); CHU, Donghui, Uiwang-si, Gyeonggi-do 16073 (KR)
(74) Representative: Germain Maureau
(86) International application number: PCT/KR2023/010320
(87) International publication number: WO 2024/019491

(57) **Abstract**

Provided is a thermoplastic resin composition including, based on 100 parts by weight of a base resin including (A) 10 to 15 wt% of an acrylate-based rubber-modified graft copolymer, (B) 10 to 30 wt% of a silicone-acrylate composite rubber-modified graft copolymer, and (C) 60 to 80 wt% of a polyalkyl (meth)acrylate resin, (D) 0.5 to 3 parts by weight of a siloxane modified polyester; (E) 0.1 to 1 part by weight of an anthraquinone-based dye; and (F) 0.1 to 1 part by weight of a radical scavenger having a weight average molecular weight of greater than or equal to 2,000 g/mol.

## Description

### [Technical Field]

The present invention relates to a thermoplastic resin composition and a molded product manufactured from the same.

### [Background Art]

Recently, a thermoplastic resin variously applied to electric/electronic products, automobiles, construction materials, leisure goods, and the like has been rapidly replacing a conventional glass or metal area. Accordingly, demand for a thermoplastic resin capable of realizing improved impact resistance, weather resistance, molding workability, and high-quality appearance is being increased.

Acrylonitrile-butadiene-styrene copolymer resin (hereinafter, ABS resin), which is widely used as a thermoplastic resin, includes chemically unstable double bonds in the rubber component, and thus the rubber component can easily age due to ultraviolet rays. Accordingly, ABS resin has poor weather resistance and light resistance, and therefore, if left outdoors for a long time, it is prone to discoloration and deterioration of physical properties over time, making it unsuitable for outdoor use exposed to sunlight.

On the contrary, an acrylonitrile-styrene-acrylate copolymer resin (hereinafter, ASA resin) uses a chemically stable acrylate-based rubbery polymer instead of the butadiene-based rubbery polymer as the rubber component and thus is known to solve the discoloring and property deterioration problems of the ABS resin according to aging of the rubber component due to ultraviolet (UV). In addition, the ASA resin has improved moldability, chemical resistance, and thermal stability and the like as well as weather resistance and light resistance.

Recently, requirements for a non-painted thermoplastic resin usable without a painting process have been increased according to an environmentally-friendly trend. Since non-painted thermoplastic resins are used as non-painted molded products, they must have excellent scratch resistance, colorability, impact resistance, and weather resistance and recently, as the level of property requirements has increased, attempts to apply ASA/PMMA alloy resins, which are ASA resins mixed with polymethyl methacrylate resin (hereinafter, PMMA resin), are also increasing.

However, ASA/PMMA alloy resin lacks impact resistance and heat resistance compared to ASA resin, and in particular, when general heat-resistant reinforcing agents are used to supplement heat resistance, the transparency and colorability of the molded product are reduced due to the difference in refractive index between the continuous phase (matrix) and the dispersed phase (domain), so that an excessive amount of colorant such as pigment or dye may need to be used to color the molded product.

Therefore, research is needed on a thermoplastic resin composition having excellent scratch resistance, weather resistance, and colorability.

### [Disclosure]

### [Technical Problem]

An embodiment provides a thermoplastic resin composition having excellent scratch resistance, weather resistance, and colorability, and a molded product manufactured therefrom.

### [Technical Solution]

According to an embodiment, a thermoplastic resin composition includes, based on 100 parts by weight of a base resin including (A) 10 to 15 wt% of an acrylate-based rubber-modified graft copolymer, (B) 10 to 30 wt% of a silicone-acrylate composite rubber-modified graft copolymer, and (C) 60 to 80 wt% of a polyalkyl (meth)acrylate resin, (D) 0.5 to 3 parts by weight of a siloxane modified polyester; (E) 0.1 to 1 part by weight of an anthraquinone-based dye; and (F) 0.1 to 1 part by weight of a radical scavenger having a weight average molecular weight of greater than or equal to 2,000 g/mol.

The (A) acrylate-based rubber-modified graft copolymer may include a core including an acrylate-based rubbery polymer, and a shell formed by graft polymerization of at least one selected from a (meth)acrylate compound, an aromatic vinyl compound, and a vinyl cyanide compound onto the core.

An average particle diameter of the acrylate-based rubbery polymer may be 200 to 300 nm.

The (A) acrylate-based rubber-modified graft copolymer may include a butyl acrylate-styrene crosslinked copolymer core, and a shell formed by grafting polymethyl methacrylate (PMMA) onto the core.

The (B) silicone-acrylate composite rubber-modified graft copolymer may include a core including a silicone-acrylate composite rubbery polymer, and a shell formed by graft polymerization of at least one selected from a (meth)acrylate-based compound, an aromatic vinyl compound, and a vinyl cyanide compound onto the core.

An average particle diameter of the silicone-acrylate composite rubbery polymer may be 100 to 200 nm.

The (B) silicone-acrylate composite rubber-modified graft copolymer may include an acrylate-based compound-silicone-based compound crosslinked copolymer core, and a shell formed by grafting a styrene-acrylonitrile (SAN) copolymer onto the core.

The (C) polyalkyl (meth)acrylate resin may be a polymethyl methacrylate (PMMA) resin.

The (D) siloxane modified polyester may include a structural unit represented by Chemical Formula 1: 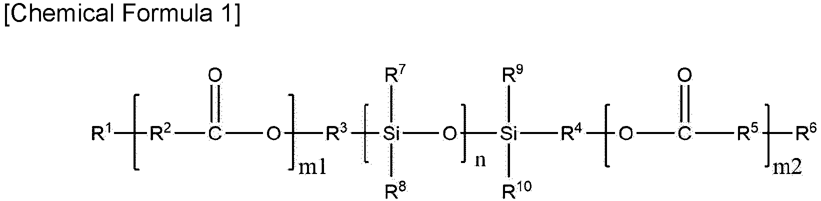 (In Chemical Formula 1,
R¹ and R⁶ are each independently hydrogen, a hydroxyl group, or a methyl group,
R², R³, R⁴, and R⁵ are each independently a C1 to C10 alkylene group,
R⁷, R⁸, R⁹, and R¹⁰ are each independently C1 to C10 alkyl group, or a C6 to C20 aryl group, and
m1, m2, and n are each independently an integer greater than or equal to 1)

The (F) radical scavenger having the weight average molecular weight of greater than or equal to 2,000 g/mol may include a structure represented by Chemical Formula 2. 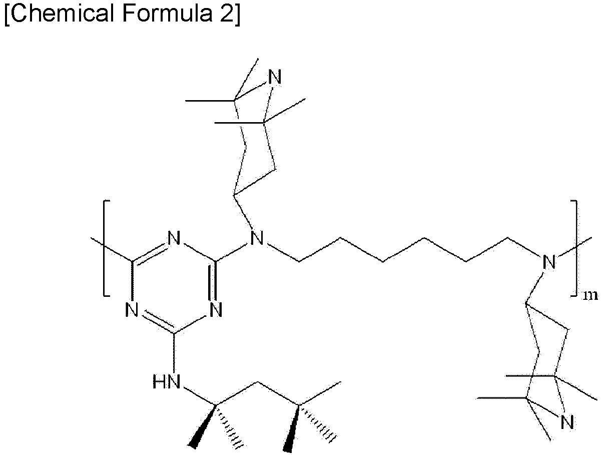 (In Chemical Formula 2, m is an integer from 2 to 20)

The thermoplastic resin composition may further include at least one additive selected from a flame retardant, a nucleating agent, a coupling agent, a filler, a plasticizer, an impact modifier, a lubricant, a release agent, a heat stabilizer, an antioxidant, an ultraviolet (UV) stabilizer, a pigment, and a dye.

In another embodiment, a molded product manufactured from the thermoplastic resin composition is provided.

The molded product may have a brightness (L*) of less than or equal to 2.0, as measured in Specular Component Excluded (SCE) mode according to ASTM E308 on a 2.5 mm-thick specimen.

The molded product may have a color change (ΔE) of less than or equal to 3.0 before and after a weathering test measured by irradiating the molded product with 4,500 kJ of energy according to SAE J 1960.

The molded product may have a brightness change (ΔL) of less than or equal to 2.0 before and after scratch resistance evaluation measured using Erichsen Scratch Hardness Tester 430 P-I.

### [Advantageous Effects]

A thermoplastic resin composition having excellent scratch resistance, weather resistance and colorability, and a molded product manufactured therefrom can be provided.

### [Best Mode]

Hereinafter, embodiments of the present invention are described in detail. However, these embodiments are exemplary, and this disclosure is not limited thereto.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using a dynamic light scattering analysis equipment.

In the present specification, unless otherwise mentioned, the weight average molecular weight is measured by dissolving a powder sample in an appropriate solvent and then performing gel permeation chromatography (GPC) with a 1200 series made by Agilent Technologies Inc. (a standard sample is polystyrene made by Shodex).

A thermoplastic resin composition according to an embodiment includes, based on 100 parts by weight of a base resin including (A) 10 to 15 wt% of an acrylate-based rubber-modified graft copolymer, (B) 10 to 30 wt% of a silicone-acrylate composite rubber-modified graft copolymer, and (C) 60 to 80 wt% of a polyalkyl (meth)acrylate resin, (D) 0.5 to 3 parts by weight of a siloxane modified polyester; (E) 0.1 to 1 part by weight of an anthraquinone-based dye; and (F) 0.1 to 1 part by weight of a radical scavenger having a weight average molecular weight of greater than or equal to 2,000 g/mol.
Hereinafter, each component of the thermoplastic resin composition is described in detail.

### (A) Acrylate-based rubber-modified graft copolymer

A thermoplastic resin composition according to an embodiment includes (A) an acrylate-based rubber-modified graft copolymer. The (A) acrylate-based rubber-modified graft copolymer performs a function of reinforcing various physical properties of the thermoplastic resin composition, such as impact resistance, mechanical properties, and appearance properties.

In an embodiment, the (A) acrylate-based rubber-modified graft copolymer may include a core including an acrylate-based rubbery polymer, and a shell formed by graft polymerization of at least one selected from a (meth)acrylate compound, an aromatic vinyl compound, and a vinyl cyanide compound onto the core.

The (A) acrylate-based rubber-modified graft copolymer may be prepared by any method known to those skilled in the art.

The preparation method may be a conventional polymerization method, for example, emulsion polymerization, suspension polymerization, solution polymerization, bulk polymerization, or the like. As a non-limiting example, it may be prepared by a method of preparing an acrylate-based rubbery polymer, and graft polymerizing at least one selected from a (meth)acrylate compound, an aromatic vinyl compound, and a vinyl cyanide compound onto a core formed of at least one layer of the acrylate-based rubbery polymer to form a shell of at least one layer.

The acrylate-based rubbery polymer may be a crosslinked polymer prepared using an acrylate-based compound as a main monomer. The acrylate-based compound may be for example ethyl acrylate, butyl acrylate, 2-ethyl hexyl acrylate, hexyl acrylate, or a combination thereof.

The acrylate-based compound may be copolymerized with one or more other radically polymerizable monomer. When copolymerized, an amount of the one or more other radically polymerizable monomer may be 5 to 30 wt%, for example 10 to 20 wt%, based on a total weight of the acrylate-based rubbery polymer.

An average particle diameter of the acrylate-based rubbery polymer may be 200 to 300 nm. Within the above average particle diameter range, the thermoplastic resin composition may have improved mechanical properties such as impact resistance and tensile strength, and colorability.

The (meth)acrylate compound included in the shell may be at least one selected from methacrylate, acrylate, methyl methacrylate, methyl acrylate, ethyl methacrylate, ethyl acrylate, propyl methacrylate, propyl acrylate, butyl methacrylate, and butyl acrylate, but is not limited thereto.

The aromatic vinyl compound included in the shell may be at least one selected from styrene, α-methylstyrene, p-methylstyrene, p-t-butylstyrene, 2,4-dimethylstyrene, chlorostyrene, vinyltoluene, and vinylnaphthalene, but is not limited thereto.

The vinyl cyanide compound included in the shell may be at least one selected from acrylonitrile, methacrylonitrile, and fumaronitrile, but is not limited thereto.

In an embodiment, when a monomer mixture including the aromatic vinyl compound and the vinyl cyanide compound is graft-polymerized onto the core including the acrylate-based rubbery polymer to form a shell, the shell may be a copolymer of a monomer mixture including the aromatic vinyl compound and the vinyl cyanide compound in a weight ratio of 1:1 to 4:1, for example 1:1 to 3:1.

In an embodiment, the (A) acrylate-based rubber-modified graft copolymer may include 40 to 80 wt% of the acrylate-based rubbery polymer. The weather resistance and impact resistance of the thermoplastic resin composition may be improved within the above weight range.

In an embodiment, the (A) acrylate-based rubber-modified graft copolymer may include a butyl acrylate-styrene crosslinked copolymer core and a shell formed by grafting polymethyl methacrylate (PMMA) onto the core.

In an embodiment, the (A) acrylate-based rubber-modified graft copolymer may be included in an amount of 10 to 15 wt%, for example 10 to 12 wt%, for example 12 to 15 wt%, based on 100 wt% of the base resin. Within the above weight % range, the thermoplastic resin composition may have excellent impact resistance and scratch resistance.

### (B) Silicone-acrylate composite rubber-modified graft copolymer

The thermoplastic resin composition according to an embodiment includes (B) a silicone-acrylate composite rubber-modified graft copolymer. The (B) silicone-acrylate composite rubber-modified graft copolymer imparts excellent impact resistance to the thermoplastic resin composition. The (B) silicone-acrylate composite rubber-modified graft copolymer may include a core including a silicone-acrylate composite rubbery polymer, and a shell formed by graft polymerization of at least one selected from a (meth)acrylate-based compound, an aromatic vinyl compound, and a vinyl cyanide compound onto the core.

The (B) silicone-acrylate composite rubber-modified graft copolymer may be prepared by using an emulsion polymerization, a suspension polymerization, a solution polymerization, a bulk polymerization, etc. As a non-limiting example, it may be prepared by a method of preparing a silicone-acrylate composite rubbery polymer, and graft-polymerizing a monomer mixture including at least one selected from a (meth)acrylate-based compound, an aromatic vinyl compound, and a vinyl cyanide compound onto a core formed of at least one layer of the silicone-acrylate composite rubbery polymer to form at least one layer of a shell.

The silicone-acrylate composite rubbery polymer may be a crosslinked copolymer of an acrylate-based compound-silicone-based compound, or a mixture of an acrylate-based rubbery polymer and a silicone-based rubbery polymer.

The acrylate-based rubbery polymer may be a crosslinked polymer prepared by using an acrylate-based compound as a main monomer. The acrylate-based compound may be, for example, ethyl acrylate, butyl acrylate, 2-ethylhexyl acrylate, hexyl acrylate, or a combination thereof, but is not limited thereto.

The silicone-based rubbery polymer may be a crosslinked polymer prepared by using a silicone-based compound as a main monomer. The silicone-based compound may be, for example, dimethyl siloxane, methylphenyl siloxane, methylvinyl siloxane, or a combination thereof, but is not limited thereto.

An average particle diameter of the silicone-acrylate composite rubbery polymer may be 100 to 200 nm, for example 120 to 180 nm. Within the above average particle diameter range, the thermoplastic resin composition may have improved impact resistance and colorability.

In the silicone-acrylate composite rubbery polymer, a weight ratio of the component derived from the acrylate-based compound and the component derived from the silicone-based compound may be 95 : 5 to 85 : 15, for example 95 : 5 to 90 : 10. Within this range, the thermoplastic resin composition may have improved impact resistance and colorability.

The silicone-acrylate composite rubbery polymer may be included in an amount of 20 to 60 wt%, for example 30 to 60 wt%, for example 40 to 60 wt% based on 100 wt% of the (B) silicone-acrylate composite rubber-modified graft copolymer.

The (meth)acrylate-based compound included in the shell may be at least one selected from methacrylate, acrylate, methyl methacrylate, methyl acrylate, ethyl methacrylate, ethyl acrylate, propyl methacrylate, propyl acrylate, butyl methacrylate, and butyl acrylate, but is not limited thereto.

The aromatic vinyl compound included in the shell may be at least one selected from styrene, α-methylstyrene, p-methylstyrene, p-t-butylstyrene, 2,4-dimethylstyrene, chlorostyrene, vinyltoluene, and vinylnaphthalene, but is not limited thereto.

The vinyl cyanide compound included in the shell may be at least one selected from acrylonitrile, methacrylonitrile, and fumaronitrile, but is not limited thereto.

In an embodiment, when a monomer mixture including the aromatic vinyl compound and the vinyl cyanide compound is graft-polymerized onto the silicone-acrylate composite rubbery polymer to form a shell, the shell may be a copolymer of a monomer mixture including the aromatic vinyl compound and the vinyl cyanide compound in a weight ratio of 1:1 to 4:1, for example 1:1 to 3:1.

In an embodiment, the (B) silicone-acrylate composite rubber-modified graft copolymer may include an acrylate-based compound-silicone-based compound crosslinked copolymer core, and a shell formed by grafting a styrene-acrylonitrile (SAN) copolymer onto the core.

In an embodiment, the (B) silicone-acrylate composite rubber-modified graft copolymer may be included in an amount of greater than or equal to 10 wt%, for example greater than or equal to 15 wt%, for example less than or equal to 30 wt%, for example less than or equal to 25 wt%, for example 10 to 30 wt%, for example 15 to 25 wt%, based on 100 wt% of the base resin. Within the above weight range, the thermoplastic resin composition can have excellent impact resistance, fluidity and colorability.

### (C) Polyalkyl (meth)acrylate resin

The thermoplastic resin composition according to an embodiment includes (C) a polyalkyl (meth)acrylate resin. The (C) polyalkyl (meth)acrylate resin can impart scratch resistance to a thermoplastic resin composition.

The (C) polyalkyl (meth)acrylate resin may be obtained by polymerizing an alkyl (meth)acrylate-based compound by a known polymerization method such as suspension polymerization, bulk polymerization, or emulsion polymerization.

The alkyl (meth)acrylate-based compound may be at least one selected from methyl methacrylate, methyl acrylate, ethyl methacrylate, ethyl acrylate, propyl methacrylate, propyl acrylate, butyl methacrylate, and butyl acrylate, but is not limited thereto.

The (C) polyalkyl (meth)acrylate resin may have a glass transition temperature of 100 to 150 °C, or for example 110 to 130 °C.

The (C) polyalkyl (meth)acrylate resin may have a weight average molecular weight of 50,000 to 200,000 g/mol, and specifically 70,000 to 150,000 g/mol. When the above range is satisfied, the thermoplastic resin composition may exhibit excellent scratch resistance and fluidity.

In an embodiment, the (C) polyalkyl (meth)acrylate resin may be a polymethyl methacrylate (PMMA) resin.

The (C) polyalkyl (meth)acrylate resin may be included in an amount of greater than or equal to 60 wt%, for example greater than or equal to 65 wt%, for example less than or equal to 80 wt%, for example less than or equal to 75 wt%, for example 60 to 80 wt%, for example 60 to 75 wt%, for example 65 to 75 wt%, based on 100 wt% of the base resin. Within the above range, the thermoplastic resin composition may have improved scratch resistance.

### (D) Siloxane modified polyester

The thermoplastic resin composition according to an embodiment includes (D) a siloxane modified polyester. The (D) siloxane modified polyester can improve the scratch resistance of the thermoplastic resin composition.

A polymethyl methacrylate (PMMA) resin, which is commonly used to improve scratch resistance, has excellent scratch resistance due to high transmittance, surface gloss, and superior rigidity. However, the polymethyl methacrylate resin has a problem in that it has low impact strength compared to other plastic materials, making it difficult to apply to applications requiring impact resistance. Therefore, a suitable impact modifier should be used to improve impact resistance.

However, since the introduction of an impact modifier has the disadvantage of lowering surface hardness and scratch resistance, when used for automobile exteriors, electronic device housings, etc., serious appearance quality problems such as external contaminants, scratches, and scratches caused by users may occur, and during the product production process, scratches caused by workers may increase the product defect rate, which may lead to an increase in production costs. In addition, if protective films, etc. are used to prevent scratches, this may increase manufacturing costs and have a negative impact on product price.

The present invention is intended to solve the above problems, and by introducing the (D) siloxane modified polyester into the base resin including (A) to (C), a thermoplastic resin composition having excellent scratch resistance and improved impact resistance and fluidity can be provided.

The (D) siloxane modified polyester may be represented by Chemical Formula 1: 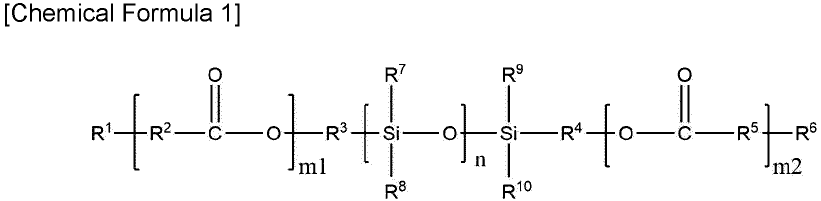 (In Chemical Formula 1,
R¹ and R⁶ are each independently hydrogen, a hydroxyl group, or a methyl group,
R², R³, R⁴, and R⁵ are each independently a C1 to C10 alkylene group,
R⁷, R⁸, R⁹, and R¹⁰ are each independently C1 to C10 alkyl group, or a C6 to C20 aryl group, and
m1, m2, and n are each independently an integer greater than or equal to 1)

In an embodiment, R³ and R⁴ of Chemical Formula 1 may each independently be a C1 to C3 alkylene group, R² and R⁵ may each independently be a C3 to C5 alkylene group, R⁷, R⁸, R⁹, and R¹⁰ may each independently be a C1 to C4 alkyl group, and (m1+m2):n may be 1.5:3 to 2:3.

The (D) siloxane modified polyester may be included in an amount of 0.5 to 3 parts by weight, for example 1 to 3 parts by weight, for example 1 to 2 parts by weight, based on 100 parts by weight of the base resin. Within the above weight range, the scratch resistance and impact resistance of the thermoplastic resin composition may be improved.

### (E) Anthraquinone-based dye

A thermoplastic resin composition according to an embodiment may include (E) an anthraquinone-based dye. The (E) anthraquinone-based dye may cause the thermoplastic resin composition to exhibit a black color.

The (E) anthraquinone-based dye may be a compound including greater than or equal to 50 wt% of a component having a structure represented by Chemical Formula 3.

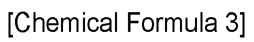

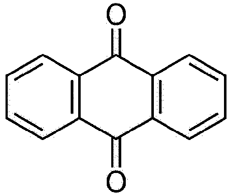

In an embodiment, a dispersant may be used together with the anthraquinone-based dye to disperse it in the thermoplastic resin composition. Specifically, the dye may be used by previously surface-treating with a dispersant, or by adding a dispersant together with the dye when preparing the thermoplastic resin composition.

The dispersant may be a nonionic dispersant, an anionic dispersant, a cationic dispersant, etc.

The (E) anthraquinone-based dye may be included in an amount of 0.1 to 1 part by weight, for example 0.1 to 0.8 parts by weight, based on 100 parts by weight of the base resin.

### (F) Radical scavenger having a weight average molecular weight of greater than or equal to 2,000 q/mol

The thermoplastic resin composition according to an embodiment may include (F) a radical scavenger having a weight average molecular weight of greater than or equal to 2,000 g/mol, and the radical scavenger may play a role in improving the weather resistance of the thermoplastic resin composition of the present invention.

The radical scavenger may include a compound having radical scavenging ability, such as a hindered amine compound, a hindered phenol compound, or a mixture of two or more thereof.

In an embodiment, the (F) radical scavenger having a weight average molecular weight of greater than or equal to 2,000 g/mol may include a structure represented by Chemical Formula 2. 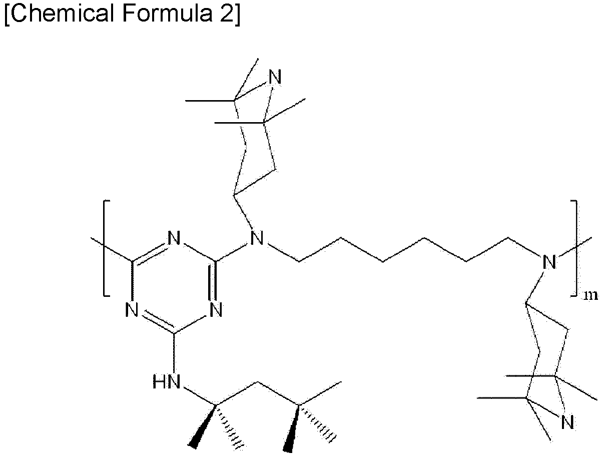 (In Chemical Formula 2, m is an integer from 2 to 20)

The (F) radical scavenger having a weight average molecular weight of greater than or equal to 2,000 g/mol may have a weight average molecular weight of 2,000 to 10,000 g/mol, for example 2,000 to 5,000 g/mol, for example 2,000 to 3,000 g/mol.

The (F) radical scavenger having a weight average molecular weight of greater than or equal to 2,000 g/mol may be included in an amount of 0.1 to 1 part by weight, for example 0.1 to 0.8 parts by weight, based on 100 parts by weight of the base resin. Within the above weight range, the thermoplastic resin composition may have excellent weather resistance.

### (G) Additive

The thermoplastic resin composition according to an embodiment may further include, in addition to the components (A) to (F), one or more additives necessary to balance the properties without causing a deterioration of other properties, or depending on the final use of the thermoplastic resin composition.

Specifically, the additive may further include at least one additive selected from a flame retardant, a nucleating agent, a coupling agent, a filler, a plasticizer, an impact modifier, a lubricant, a release agent, a heat stabilizer, an antioxidant, an ultraviolet (UV) stabilizer, a pigment, and a dye.

The additive may be appropriately included, unless properties of the thermoplastic resin composition are deteriorated, and specifically, included in an amount of less than or equal to about 20 parts by weight based on 100 parts by weight of the base resin, but is not limited thereto.

On the other hand, the thermoplastic resin composition of an embodiment may be mixed with other resins or other rubber components.

On the other hand, another embodiment provides a molded product manufactured using the thermoplastic resin composition according to an embodiment. The molded product may be manufactured in various methods publicly known in the related art, for example, a method of injection molding, extrusion molding, and the like by using the thermoplastic resin composition.

The molded product may have a brightness (L*) of less than or equal to 2.0, less than or equal to 1.9, or less than or equal to 1.8, as measured in Specular Component Excluded (SCE) mode according to ASTM E308 on a 2.5 mm thick specimen.

The molded product may have a color change (ΔE) of less than or equal to 3.0, less than or equal to 2.8, less than or equal to 2.6, less than or equal to 2.4, less than or equal to 2.2, less than or equal to 2.0 before and after a weathering test measured by irradiating the molded product with 4,500 kJ of energy according to SAE J 1960.

The molded product may have a brightness change (ΔL) of less than or equal to 2.0, less than or equal to 1.8, less than or equal to 1.6, less than or equal to 1.4, less than or equal to 1.2, or less than or equal to 1.0 before and after scratch resistance evaluation measured using Erichsen Scratch Hardness Tester 430 P-I.

### [Mode for Invention]

Hereinafter, preferred examples of the present invention will be described. These examples, however, are not in any sense to be interpreted as limiting the scope of the invention.

### Examples 1 to 4 and Comparative Examples 1 to 7

The thermoplastic resin compositions according to Examples 1 to 4 and Comparative Examples 1 to 7 were respectively prepared according to each component content ratio shown in Table 1.

The components shown in Table 1 were mixed in a conventional mixer and then, extruded by using a twin-screw extruder (L/D = 29, Φ = 45 mm) at a barrel temperature of about 230°C to prepare each thermoplastic resin composition in the form of pellets. Each of the thermoplastic resin composition pellets was dried at about 80 °C in a dehumidifying dryer for about 4 hours and then, manufactured into a specimen for measuring physical properties by using a 6 oz injection molding machine and setting a cylinder temperature to 230°C and a mold temperature to 60°C. The measured properties are shown in Table 2.

In Table 1, the components (A) to (C) were respectively expressed as wt% based on a total weight of the components of (A) to (C), and the components (D) to (F) were expressed as parts by weight based on 100 parts by weight of the total weight of the component (A) to (C).

**(Table 1)**

| | Examples | | | | Comparative Examples | | | | | | |
|---|---|---|---|---|---|---|---|---|---|---|---|
| | 1 | 2 | 3 | 4 | 1 | 2 | 3 | 4 | 5 | 6 | 7 |
| (A) | 12 | 12 | 12 | 12 | 27 | 12 | 12 | 12 | 12 | 12 | 12 |
| (B) | 15 | 25 | 15 | 15 | - | 38 | 15 | 15 | 15 | 15 | 25 |
| (C) | 73 | 63 | 73 | 73 | 73 | 50 | 73 | 73 | 73 | 73 | 63 |
| (D) | 2 | 2 | 2 | 1 | 2 | 2 | - | 2 | 2 | 2 | 2 |
| (E-1) | 0.5 | 0.5 | 0.1 | 0.5 | 0.5 | 0.5 | 0.5 | - | - | - | 0.5 |
| (E-2) | - | - | - | - | - | - | - | 0.5 | - | - | - |
| (E-3) | - | - | - | - | - | - | - | - | 0.5 | - | - |
| (E-4) | - | - | - | - | - | - | - | - | - | 0.5 | - |
| (F-1) | 0.5 | 0.5 | 0.5 | 0.5 | 0.5 | 0.5 | 0.5 | 0.5 | 0.5 | 0.5 | - |
| (F-2) | - | - | - | - | - | - | - | - | - | - | 0.5 |

| | | | | | | | | | | | |
|---|---|---|---|---|---|---|---|---|---|---|---|
| Each of the components shown in Table 1 is described in detail as follows. | | | | | | | | | | | |

### (A) Acrylate-based rubber-modified graft copolymer

A core-shell structure graft copolymer including about 60 wt% of a core including a butyl acrylate-styrene crosslinked copolymer with an average particle diameter of about 250 nm and a shell grafted with polymethyl methacrylate onto the core (Product name: Kane Ace^{®} M-210, Manufacturer: Kaneka Corp.).

### (B) Silicone-acrylate composite rubber-modified graft copolymer

A core-shell structure graft copolymer including about 60 wt% of a core including an acrylate-based compound-silicone-based compound crosslinked copolymer with an average particle diameter of about 150 nm and a shell grafted with styrene and acrylonitrile in a weight ratio of about 2 : 1 onto the core (Product name: Metablen^{™} SX-006, Manufacturer: Mitsubishi Chemical Corp.)

### (C) Polyalkyl (meth)acrylate resin

A polymethyl methacrylate (PMMA) resin with a weight average molecular weight of about 100,000 g/mol (Product name: VH, Manufacturer: Lotte Chemical Corp.) was used

### (D) Siloxane modified polyester

Tegomer^{®} H-Si 6441 P manufactured by Evonik Industries AG was used.

### (E-1) Anthraquinone-based dye

A dye including 50 wt% or more of a component with a structure represented by Chemical Formula 3 was used.

### (E-2) Carbon black

Hiblack^{®} 50L manufactured by Orion Engineered Carbons.

### (E-3) Acridine-based dye

A dye including 50 wt% or more of a component with a structure represented by Chemical Formula 4 was used:

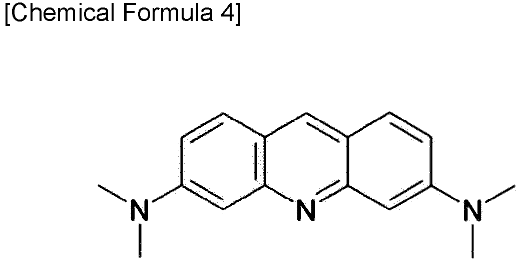

### (E-4) Phthalocyanine-based dye

A dye including 50 wt% or more of a component with a structure represented by Chemical Formula 5 was used:

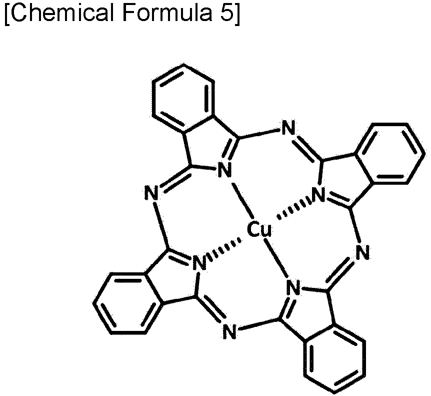

### (F-1) Radical scavenger with a weight average molecular weight of greater than or equal to 2,000 g/mol

Chimassorb^{®} 944 manufactured by BASF was used.

### (F-2) Radical scavenger with a molecular weight of 480

Tinuvin^{®} 770 manufactured by BASF was used.

### Property Evaluation

The specimens for measuring physical properties according to Examples 1 to 4 and Comparative Examples 1 to 7 were measured with respect to impact resistance, heat resistance, and weather resistance in the following methods, and the evaluation results are shown in Table 2.
(1) Colorability: The 2.5 mm-thick specimens were measured with respect to brightness (L*) in a specular component excluded (SCE) mode according to ASTM E308 by using CM-3700d made by Konica Minolta Inc. The lower brightness, the better black color implementation, which was judged as excellent colorability.
(2) Weather Resistance: The specimens were measured with respect to a color change (ΔE) on the glossy surface before and after irradiating them with 4,500 kJ of energy with CM-3700d made by Konica Minolta Inc., which was measured in the specular component excluded (SCE) mode according to SAE J 1960 by using Xenon-arc accelerated weathering tester.
(3) Scratch Resistance: The specimens were measured with respect to a brightness change (ΔL) before and after scratching them by using a scratch hardness tester, 430 P-I made by Erichsen GmbH & Co. KG to apply 20 times' grid-shaped scratches onto them at an interval of 2 mm with a test tip with a diameter of 1 mm under a load of 10 N at a cutting speed of 1 m/min, which was measured in the specular component excluded (SCE) mode by using CM-3700d made by Konica Minolta Inc. If the scratches are applied, microcracks occur on the specimen surface, creating flaws, which increase the brightness of the specimens, wherein the higher brightness change (ΔL), the lower scratch resistance due to the more damages by the scratches.

**(Table 2)**

| | Examples | | | | Comparative Examples | | | | | | |
|---|---|---|---|---|---|---|---|---|---|---|---|
| | 1 | 2 | 3 | 4 | 1 | 2 | 3 | 4 | 5 | 6 | 7 |
| Colorability | 1.3 | 1.9 | 1.9 | 1.0 | 0.8 | 3.2 | 0.8 | 3.3 | 2.5 | 2.5 | 1.8 |
| Weather resistance | 1.0 | 1.9 | 1.2 | 0.9 | 0.8 | 2.8 | 0.7 | 4.8 | 6.4 | 6.5 | 3.3 |
| Scratch resistance | 0.5 | 0.4 | 0.3 | 1.8 | 3.3 | 0.4 | 4.4 | 0.5 | 0.5 | 0.5 | 0.6 |

Referring to the results of Tables 1 to 2, a thermoplastic resin composition including the components (A) to (F) and a molded product manufactured therefrom were confirmed to exhibit all excellent colorability, weather resistance, and scratch resistance.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A thermoplastic resin composition, comprising
based on 100 parts by weight of a base resin, comprising
(A) 10 to 15 wt% of an acrylate-based rubber-modified graft copolymer;
(B) 10 to 30 wt% of a silicone-acrylate composite rubber-modified graft copolymer; and
(C) 60 to 80 wt% of a polyalkyl (meth)acrylate resin,
(D) 0.5 to 3 parts by weight of a siloxane modified polyester;
(E) 0.1 to 1 part by weight of an anthraquinone-based dye; and
(F) 0.1 to 1 part by weight of a radical scavenger having a weight average molecular weight of greater than or equal to 2,000 g/mol.

2. The thermoplastic resin composition of claim 1, wherein
the (A) acrylate-based rubber-modified graft copolymer comprises a core comprising an acrylate-based rubbery polymer, and a shell formed by graft polymerization of at least one selected from a (meth)acrylate-based compound, an aromatic vinyl compound, and a vinyl cyanide compound onto the core.

3. The thermoplastic resin composition of claim 2, wherein
an average particle diameter of the acrylate-based rubbery polymer is 200 to 300 nm.

4. The thermoplastic resin composition of any one of claim 1 to claim 3, wherein
the (A) acrylate-based rubber-modified graft copolymer comprises a butyl acrylate-styrene crosslinked copolymer core and a shell formed by grafting polymethyl methacrylate onto the core.

5. The thermoplastic resin composition of any one of claim 1 to claim 4, wherein
the (B) silicone-acrylate composite rubber-modified graft copolymer comprises a core comprising a silicone-acrylate composite rubbery polymer, and a shell formed by graft polymerization of at least one selected from a (meth)acrylate-based compound, an aromatic vinyl compound, and a vinyl cyanide compound onto the core.

6. The thermoplastic resin composition of claim 5, wherein
an average particle diameter of the silicone-acrylate composite rubbery polymer is 100 to 200 nm.

7. The thermoplastic resin composition of any one of claim 1 to claim 6, wherein
the (B) silicone-acrylate composite rubber-modified graft copolymer comprises an acrylate-based compound-silicone-based compound crosslinked copolymer core, and a shell formed by grafting a styrene-acrylonitrile copolymer onto the core.

8. The thermoplastic resin composition of any one of claim 1 to claim 7, wherein
the (C) polyalkyl (meth)acrylate resin is a polymethyl methacrylate (PMMA) resin.

9. The thermoplastic resin composition of any one of claim 1 to claim 8, wherein
the (D) siloxane modified polyester comprises a structural unit represented by Chemical Formula 1: 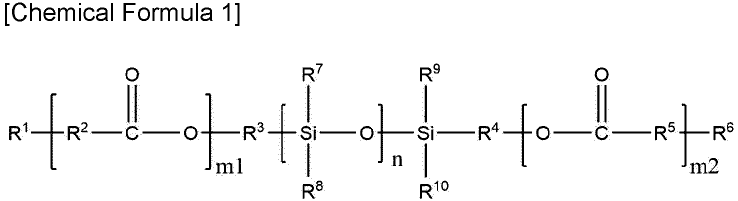 (wherein, in Chemical Formula 1,
R¹ and R⁶ are each independently hydrogen, a hydroxyl group, or a methyl group,
R², R³, R⁴, and R⁵ are each independently a C1 to C10 alkylene group,
R⁷, R⁸, R⁹, and R¹⁰ are each independently C1 to C10 alkyl group, or a C6 to C20 aryl group, and
m1, m2, and n are each independently an integer greater than or equal to 1)

10. The thermoplastic resin composition of any one of claim 1 to claim 9, wherein
the (F) radical scavenger having a weight average molecular weight of greater than or equal to 2,000 g/mol includes a structure represented by Chemical Formula 2. 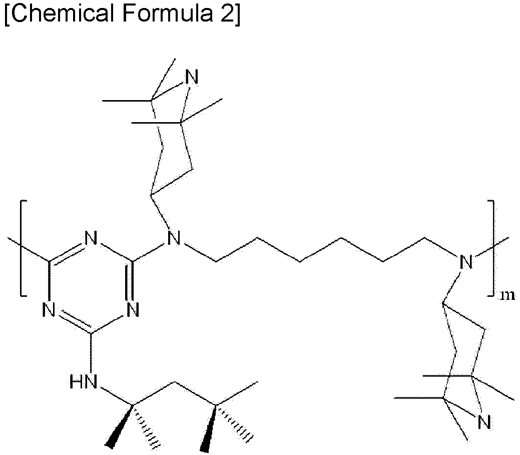 (In Chemical Formula 2, m is an integer from 2 to 20)

11. The thermoplastic resin composition of any one of claim 1 to claim 10, wherein
the thermoplastic resin composition further includes at least one additive selected from a flame retardant, a nucleating agent, a coupling agent, a filler, a plasticizer, an impact modifier, a lubricant, a release agent, a heat stabilizer, an antioxidant, an ultraviolet (UV) stabilizer, a pigment, and a dye.

12. A molded product manufactured from the thermoplastic resin composition of any one of claim 1 to claim 11.

13. The molded product of claim 12, wherein
the molded product has a brightness (L*) of less than or equal to 2.0, as measured in Specular Component Excluded (SCE) mode according to ASTM E308 on a 2.5 mm-thick specimen.

14. The molded product of claim 12 or claim 13, wherein
the molded product has a color change (ΔE) of less than or equal to 3.0 before and after a weathering test measured by irradiating the molded product with 4,500 kJ of energy according to SAE J 1960.

15. The molded product of any one of claim 12 to claim 14, wherein
the molded product has a brightness change (ΔL) of less than or equal to 2.0 before and after scratch resistance evaluation measured using Erichsen Scratch Hardness Tester 430 P-I.
